# EUROPÄISCHE PATENTANMELDUNG

(11) **EP 3 467 366 A1**
(43) Veröffentlichungstag der Anmeldung: **10.04.2019**
(21) Anmeldenummer: 18199324.7
(22) Anmeldetag: 09.10.2018
(51) Int. Cl.: F16L 11/10, F16L 11/12, F16L 11/115, B64F 1/36, F24F 13/02, F16L 59/153, F16L 11/04

(54) **SCHLAUCH ZUM VERBINDEN EINER KLIMATISIERUNGSANALAGE MIT EINEM FLUGOBJEKT, VERFAHREN ZUR HERSTELLUNG EINES SOLCHEN SCHLAUCHS UND FLEXIBLE STOFFBAHN FÜR EINEN SCHLAUCH**

(30) Priorität: 09.10.2017 DE 102017123422
(71) Anmelder: Quickloading GmbH, 85640 Putzbrunn (DE)
(72) Erfinder: Kubatzki, Klaus, 85521 Riemerling (DE); van der Lelij, Armin, 83734 Hausham (DE)
(74) Vertreter: Leonhard, Frank Reimund

(57) **Zusammenfassung**

Die Erfindung liegt auf dem Gebiet der externen Versorgung eines Flugobjekts mit gekühlter oder erwärmter Luft über einen Schlauch. Der Schlauch soll robust gegenüber den auf den Schlauch wirkenden Einflüssen von außen sein und gleichzeitig leicht genug sein, um ihn bedienen zu können. Vorgeschlagen wird ein Schlauch zum Leiten eines in einer Kühl- oder Heizeinheit gekühlten oder erwärmten Gases an einen Abschnitt eines Flugobjekts. Der Schlauch 1 weist eine Schlauchwand 2 mit einer Schlauchwandaußenseite 25 und einer Schlauchwandinnenseite 26 auf. Die Schlauchwand 2 umfasst eine äußere Tragschicht 10 und eine innere Tragschicht 14, wobei die innere Tragschicht 14 dem Inneren i des Schlauches 1 zugewandt ist und die äußere Tragschicht 10 in Richtung der Umgebung des Schlauches 1 orientiert ist. Die Schlauchwand 2 umfasst eine thermisch isolierende Schicht 11, 12, 13, die zwischen der äußeren Tragschicht 10 und der inneren Tragschicht 14 angeordnet ist und eine thermische Isolierung zwischen dem Inneren i des Schlauches 1 und der Umgebung a des Schlauches 1 verursacht. Die Schlauchwand 2 umfasst Eine äußere Sperrschicht 10a, die auf der äußeren Tragschicht 10 angeordnet ist und durch die ein Stoffaustausch zwischen dem Inneren i des Schlauches 1 und der Umgebung a des Schlauches 1 zumindest reduziert wird. Die Schlauchwand 2 umfasst ein umlaufendes Versteifungselement 35, das die Schlauchwand 2 versteift und ihr eine schlauchförmige Grundform verleiht oder stabilisiert. Zwischen dem Versteifungselement 35 und der Schlauchwandaußenseite 25 ist ein Dichtungselement angeordnet.

## Beschreibung

Die Erfindung liegt auf dem Gebiet der externen Versorgung eines Flugobjekts mit gekühlter oder erwärmter (im Folgenden "temperierter") Luft über einen Schlauch.

Beispielsweise der Innenraum eines Flugzeugs wird während der Bodenzeit auf dem Flughafenvorfeld oft durch eine externe Heiz- oder Kühleinheit mit gegenüber der Umgebung erwärmter oder gekühlter Luft versorgt (je nach Jahreszeit). Auch werden Turbinen während der Standzeit eines Flugzeugs mit warmer Luft versorgt, um diese zu enteisen, wenn beispielsweise die Umgebungstemperatur unterhalb des Gefrierpunkts von Wasser liegt. In beiden Fällen wird die von extern zugeführte Luft (als Beispiel eines Gases) typischerweise ausgehend von einer Strömungsquelle über einen Schlauch an die vorgesehene Stelle am Flugzeug geleitet.

Ein Schlauch in einer solchen Anwendung genügt idealerweise einer Vielzahl von Anforderungen.
Der Schlauch muss eine hohe Gasdichtigkeit aufweisen und gleichzeitig leicht (geringes Gewicht pro Länge) sein.
Der Schlauch muss eine hohe Standzeit ermöglichen und eine einfache Bedienung erlauben, um schnell einsetzbar zu sein und den Bedienungsaufwand durch kostenintensives Personal so gering wie möglich zu halten.
Das Material des Schlauches sollte PVC-frei sein, da Weichmacher von PVC an die den Schlauch durchströmende Luft abgegeben werden können und in das Innere des Flugzeugs gelangen können, wo die Weichmacher von Passagieren eingeatmet würden.
Es dürfen keine festen Materialbestandteile des Schlauches durch den Luftstrom, der durch den Schlauch mit durchaus hoher Geschwindigkeit strömt, in das Innere des Flugzeugs oder in die Turbinen transportiert werden, da solche beispielsweise abgeplatzten Materialbestandteile oder von der Strömung abgerissene Körnchen sich an Engstellen anlagern können und so ein Betriebs- oder sogar Sicherheitsrisiko darstellen. Oder sich ganz über den Innenraum des Flugkörpers verteilen und auf Sitzen und Innenflächen wie Staub an- und ablagern. Ein so im Innern "behandeltes" Flugzeug darf nicht starten und würde von einsteigenden Passagieren fluchtartig verlassen werden.
Gleichzeitig werden solche Schläuche z.B. von dem Bodenpersonal dahingehend belastet, dass die Schläuche über den rauhen Beton-, Teer- oder Bitumenboden auf dem Flughafenvorfeld gezogen werden, was die Oberfläche des Schlauches erheblich belastet.

Aus dem Stand der Technik bekannte Schläuche erreichen diese Anforderungen nur unzureichend oder nur teilweise.

Durch die DE 11 2007 003 306 B4 ist ein Schlauch offenbart, durch den klimatisierte Luft in ein Flugzeug geleitet werden kann. Der Schlauch umfasst mehrere Schichten und ein Versteifungselement an dessen Außenseite oder zwischen den Schichten des Schlauchs.

**Die Erfindung steht vor der Aufgabe,** einen Schlauch bereitzustellen, der robust gegenüber den auf den Schlauch wirkenden Einflüssen von Aussen ist und gleichzeitig leicht genug ist, um ihn bedienen zu können, z.B. von unten anzuheben und über Kopf an einem Einlassstutzen am Flugzeug anzubringen.

Eine "leichte" und daher auch zeitsparende Bedienbarkeit wäre von Vorteil.

Diese Aufgabe wird gelöst durch einen Schlauch nach Anspruch 1 oder durch ein Verfahren nach Anspruch 8. Eine Stoffbahn (wobei "Stoff" allgemein zu verstehen ist, es kann auch synthetischer Stoff sein) bildet die Grundlage des Schlauchs, der die Stoffbahn (Anspruch 13) in einer Grundform enthält, bspw. zylindrisch oder zu einem Ende hin konisch zulaufend.

Vorgeschlagen wird ein Schlauch, der geeignet ist ein gekühltes oder erwärmtes Gas (temperierte Luft) ausgehend von einer Kühl- oder Heizeinheit an einen Abschnitt eines Flugobjekts zu leiten. Das Flugobjekt ist speziell ein Flugzeug und noch spezieller ein Passagierflugzeug mit einem Innenraum für Passagiere, auch militärischen Wesens. Der Abschnitt des Flugobjekts, an den das Gas über den Schlauch geleitet wird, ist beispielsweise ein flugobjektseitiger Anschluss an das Luftverteilungssystem, durch das auch der Innenraum des Flugobjekts versorgt wird, oder eine Turbine des Flugobjekts, wenn die Turbine beispielsweise enteist werden soll.

Der Schlauch umfasst eine Schlauchwand, wobei die Schlauchwand eine Schlauchwandaußenseite und eine Schlauchwandinnenseite aufweist. Sie "Seite" kann wie eine Oberfläche verstanden werden. Die Schlauchwand umfasst eine äußere Tragschicht und eine innere Tragschicht. Die innere Tragschicht ist dem Inneren des Schlauches zugewandt und die die äußere Tragschicht orientiert sich in Richtung der Umgebung des Schlauches. Das Innere des Schlauches ist dabei der Bereich des Schlauches, der beim Leiten des Gases von dem Gas durchströmt wird. Zusätzlich umfasst die Schlauchwand eine thermisch isolierende Schicht. Die thermisch isolierende Schicht ist zwischen der äußeren Tragschicht und der inneren Tragschicht angeordnet. Die thermisch isolierende Schicht bewirkt oder verursacht eine thermische Isolierung zwischen dem inneren des Schlauches und der Umgebung des Schlauches.

Dabei ist eine perfekte thermische Isolierung kaum realisierbar, vielmehr handelt es sich bei der bewirkten thermischen Isolierung um eine deutliche Reduktion der Wärmeübertragung von dem Inneren (i) des Schlauches zu der Umgebung (a) des Schlauches oder vice versa. Durch die thermische Isolierung wird die Wärmeübertragung zwischen dem Inneren des Schlauches und der Umgebung um mindestens den Faktor 2 reduziert, verglichen mit einer Wärmeübertragung zwischen dem Inneren des Schlauches und der Umgebung des Schlauches ohne die thermisch isolierende Schicht.

Die Schlauchwand umfasst auch eine Sperrschicht, die auf der äußeren Tragschicht vorgesehen ist. Durch die Sperrschicht wird ein Stoffaustausch zwischen dem Inneren des Schlauches und der Umgebung des Schlauches reduziert. Bei der Reduktion des Stoffaustausches handelt es sich um eine deutliche Reduktion. Der Stoffaustausch zwischen dem Inneren des Schlauches und der Umgebung des Schlauches wird um mindestens Faktor 2 reduziert, verglichen mit einem Stoffaustausch zwischen dem Inneren des Schlauches und der Umgebung des Schlauches ohne die Sperrschicht. Damit werden Verluste eingedämmt, die bei einer hohen geförderten Gasmenge schon in geringen Prozentbereichen zu erheblichen Kosten führen. Temperierte Luft ist ein Wertstoff, der bestmöglich zu 100% das Innere des Flugkörpers oder die Turbine erreicht; was verloren geht, fällt der Entropieerhöhung zu, die ein Flughafen oder ein Flughafenbetreiber zu mit guten Gründen vermeiden möchte.

Weiterhin umfasst die Schlauchwand ein bevorzugt gewendeltes Versteifungselement. Durch das Versteifungselement wird die Schlauchwand versteift und überhaupt erst dauerhaft in Form gebracht und gehalten, sodass eine mechanische Belastung von der Schlauchwand verbessert aufgefangen werden kann.

Zwischen dem Versteifungselement und der Schlauchwandaußenseite kann ein Dichtungselement angeordnet sein.

Das Dichtungselement kann gummiartige Eigenschaften aufweisen und eine Verbindung des Versteifungselements mit der Schlauchwandaußenseite verbessern.

Die äußere Tragschicht kann ein stoffartiges Material aus Polyamid umfassen. Speziell handelt es sich bei dem Polyamid um Nylon (Polyamid 6.6), das eine Gleiteigenschaft besitzt, um dem Schleifen und Ziehen auf de, Boden sowohl gewachsen zu sein, wie es auch zu begünstigen.

Die innere Tragschicht kann auch ein stoffartiges Material aus Polyamid, insbesondere Nylon, umfassen.

Die äußere Tragschicht und/oder die innere Tragschicht haben bevorzugt eine Dicke von kleiner als 10 mm, speziell von weniger als 5 mm, besonders bevorzugt weniger als 2 mm.

Die Sperrschicht kann als Beschichtung auf der Seite der äußeren Tragschicht, die der Umgebung des Schlauches zugewandt ist, aufgebracht sein. Bevorzugt hat eine solche Beschichtung eine Dicke von weniger als 2 mm, insbesondere kleiner als 1 mm.

Die Sperrschicht kann ein Polyamid umfassen.

Durch die Sperrschicht wird insbesondere bewirkt, dass der Druckverlust in dem Schlauch gering ist, wenn der Schlauch ausgehend von einer Kühl- oder Heizeinheit oder einer anderen Strömungsquelle durchströmt wird, da lediglich ein geringer (sehr geringer) Anteil des durchströmenden Gases aus dem Schlauch in seine Umgebung während der Leitung des Gases durch den Schlauch austritt.

Das Versteifungselement kann ein Polyamid-Draht sein. Der Draht kann einen Durchmesser zwischen 20 mm und 0,2 mm, insbesondere zwischen 10 mm und 1 mm, besonders bevorzugt zwischen 7 mm und 3 mm aufweisen.

Auf der Seite der inneren Tragschicht, die dem Inneren (i) des Schlauches zugewandt ist, kann keine Sperrschicht angeordnet sein. Das heißt, auf der Seite der inneren Tragschicht, die ein strömendes Gas kontaktiert, wenn der Schlauch von einem Gas durchströmt wird, ist keine Sperrschicht angeordnet wie sie auf der äußeren Tragschicht angeordnet ist.

Das Fehlen einer Sperrschicht an der Seite der inneren Tragschicht, die dem Inneren des Schlauches zugewandt ist, ist vorteilhaft, da eine Sperrschicht, insbesondere aus Polyamid, aufgrund mechanischer Belastung, beispielsweise durch Verwirbelungen des strömenden Gases durch den Schlauch in Verbindung mit bereits geringfügigen Beschädigungen, zum Aufplatzen neigt. Platzt ein Bereich der Sperrschicht auf, oder bilden sich Bruchlinien, kann im Bereich der aufgeplatzten Sperrschicht ein Teil der Sperrschicht abplatzen (sich lösen) und von dem Gasstrom durch den Schlauch in Engstellen des Flugobjekts transportiert werden. An den Bruchstellen "nagt" die vorbeiströmende Luft und "knabbert" sich kontinuierlich kleine Mengen der Innenlage ab, die der Strom sofort mitnimmt. Die Anlagerung von abgetragenen Stücken oder Elementen der Sperrschicht in Engstellen des Flugobjekts birgt ein Betriebs- oder sogar Sicherheitsrisiko für das Flugobjekt.

Die innere Tragschicht kann indes auf der Seite, die dem Inneren des Schlauches abgewandt ist, eine innere Sperrschicht umfassen. Das ist die von der Strömung abgewandte Oberfläche der inneren Lage. Diese Sperrschicht kann den Stoffaustausch zwischen dem Inneren des Schlauches und der Umgebung des Schlauches so reduzieren wie zur Sperrschicht der äußeren Tragschicht beschrieben.

Speziell kann die innere Sperrschicht auf der inneren Tragschicht eine Wasserdampfsperrschicht sein. Durch eine Wasserdampfsperrschicht wird der Austausch von Wasserdampf zwischen dem Inneren des Schlauches und der Umgebung des Schlauches reduziert, und zwar mindestens um den Faktor 2, verglichen mit einem Wasserdampfaustausch zwischen dem Inneren des Schlauches und der Umgebung des Schlauches ohne die Wasserdampfsperrschicht.

Eine Wasserdampfsperrschicht kann insbesondere ein Anlagern von flüssigem Wasser in Schichten der Schlauchwand, die radial weiter vom Inneren des Schlauches entfernt sind als die Wasserdampfsperrschicht, verhindern. In oder an manchen Schichten der Schlauchwand kann ein Anlagern von Wasser zu einer Schimmelbildung oder einer Pilzbildung führen, was unerwünscht ist.

Die innere Sperrschicht kann auf der inneren Tragschicht eine fungizide Eigenschaft aufweisen. Dazu kann beispielsweise ein Fungizid (chemisch oder biologisch) mit der inneren Sperrschicht vorgesehen sein.

Die thermisch isolierende Schicht kann eine äußere Isolierungstragschicht, eine innere Isolierungstragschicht und eine Isolierungsschicht umfassen. Speziell können die äußere Isolierungstragschicht, die innere Isolierungstragschicht und die Isolierungsschicht durch ein erstes Nahtmaterial an Nahtstellen miteinander vernäht sein.

Die äußere und/oder innere Isolierungstragschicht können ein Polyamid umfassen. Die innere und/oder äußere Isolierungstragschicht haben bevorzugt eine Dicke von weniger als 8 mm, bevorzugt weniger als 4 mm.

Die Isolierungsschicht ist bevorzugt ein Schaumstoff.

Die Dicke der Isolierungsschicht ist bevorzugt weniger als 10 mm, besonders bevorzugt weniger als 8 mm.

Das Versteifungselement kann spiralförmig (wendelförmig) umlaufend an der Schlauchwandaußenseite angeordnet sein. Dies ist als zumindest abschnittsweise spiralförmig umlaufend an der Schlauchwandaußenseite angeordnet zu verstehen.

Durch eine spiralförmige Anordnung des Versteifungselements ergibt sich eine gute laterale oder radiale Belastbarkeit des Schlauches bei gleichzeitiger axialer Stauchbarkeit des Schlauches. Der Schlauch kann so axial gestaucht werden, ähnlich einer Ziehharmonika.

Das Versteifungselement kann in einem Gehäuse liegend an der Schlauchwandaußenseite angeordnet sein, wodurch das Versteifungselement durch das Gehäuse geschützt gelagert ist.

Die Abriebfestigkeit des Gehäuses kann höher sein als die Abriebfestigkeit der Sperrschicht und/oder die Abriebfestigkeit des Versteifungselements. Dadurch kann zum einen die Schlauchwandaußenseite und zum anderen das Versteifungselement geschützt werden, wenn der Schlauch über einen rauen Boden gezogen wird, so wie es erfahrungsgemäß durch das Bodenpersonal auf einem Flughafenvorfeld durchgeführt wird.

Die Abriebfestigkeit eines Materials kann beispielsweise nach DIN ISO 4649 bestimmt werden.

Das Versteifungselement kann in einem Gehäuse angeordnet sein, wobei das Gehäuse mit einem Dichtungselement, der Sperrschicht, der äußeren Tragschicht, der thermisch isolierenden Schicht und der inneren Tragschicht verbunden ist.

Speziell ist das Gehäuse, in dem das Versteifungselement angeordnet ist, das Dichtungselement, die Sperrschicht, die äußere Tragschicht, die thermisch isolierende Schicht und die innere Tragschicht durch ein zweites Nahtmaterial an Nahtstellen miteinander vernäht. Die Nahtstellen erstrecken sich bis nach Innen auf die innerste Oberfläche der innersten Tragschicht. Dies ist möglich, da dort keine besondere, insbesondere härtere Decklage vorgesehen ist, die von der sie durchdringenden Naht beschädigt werden könnte und an den Nahtstellen anfällig für temperierte, vorbei strömende Luft wäre.

Speziell die Perforation der Sperrschicht der äußeren Tragschicht kann durch das Dichtungselement zumindest teilweise kompensiert werden, sodass die Eigenschaft der Sperrschicht, nämlich die Reduktion eines Stoffaustauschs zwischen dem Inneren des Schlauches und der Umgebung des Schlauches, erhalten bleibt.

Die Schlauchwand kann PVC-frei ausgestaltet sein. Insbesondere enthält weder das Gehäuse, noch das Versteifungselement, noch das Dichtungselement, noch die Sperrschicht, noch die äußere Tragschicht, noch die thermisch isolierende Schicht, noch die innere Tragschicht PVC.

Der durchströmbare Querschnitt des Schlauches kann einen Durchmesser von mindestens 50 mm, besonders bevorzugt von mindestens 100 mm aufweisen. Der durchströmbare Querschnitt des Schlauches kann eine Fläche aufweisen von mindestens 0,002 m², bevorzugt mindestens 0,008 m² (aka 80 cm²).

Vorgeschlagen wird auch ein Verfahren zur Herstellung eines Schlauches, wobei der Schlauch geeignet ist ein gekühltes oder erwärmtes Gas ausgehend von einer Kühl- oder Heizeinheit an einen Abschnitt eines Flugobjekts zu leiten. Innerhalb des Verfahrens werden eine thermisch isolierende Schicht, eine äußere Tragschicht mit einer Sperrschicht und eine innere Tragschicht sowie ein Versteifungselement bereitgestellt. Die thermisch isolierende Schicht, die äußere Tragschicht mit der Sperrschicht, die innere Tragschicht und das Verfestigungselement werden miteinander verbunden. Das Verbinden wird so durchgeführt, dass die thermisch isolierende Schicht zwischen der äußeren Tragschicht und der inneren Tragschicht angeordnet ist. Aus der verbundenen isolierenden Schicht, der äußeren Tragschicht mit der Sperrschicht und der inneren Tragschicht wird ein Schlauch mit einer Schlauchwand gebildet. Auf die Schlauchwandaußenseite der Schlauchwand wird das Versteifungselement aufgebracht oder angebracht.

Ein Dichtungselement kann zwischen dem Versteifungselement und der Schlauchwandaußenseite angeordnet werden.

Auch die Stoffbahn erfüllt die technische Aufgabe.

Die Ausführungen zu den Eigenschaften und Ausgestaltungsvarianten hinsichtlich des bisher beschriebenen Schlauches gelten auch für das Herstellverfahren eines Schlauches.

Die innere Tragschicht kann auf der Seite, die dem Inneren des Schlauches zugewandt ist, keine Sperrschicht umfassen.

Die innere Tragschicht kann eine Sperrschicht auf der Seite der inneren Tragschicht umfassen, die dem Inneren des Schlauches abgewandt ist.

Die innere Sperrschicht an der inneren Tragschicht kann eine Wasserdampfsperrschicht sein, die eine Reduktion des Austausches von Wasserdampf zwischen dem Inneren des Schlauches und der Umgebung des Schlauches reduziert.

Die thermisch isolierende Schicht kann aus einer äußeren Isolierungstragschicht, einer inneren Isolierungstragschicht und einer Isolierungsschicht hergestellt werden.

Speziell kann die äußere Isolierungstragschicht, die innere Isolierungstragschicht und die Isolierungsschicht durch ein erstes Nahtmaterial an Nahtstellen miteinander vernäht werden.

Das Versteifungselement kann spiralförmig umlaufend an der Schlauchwandaußenseite angeordnet werden.

Das Versteifungselement kann in einem Gehäuse angeordnet sein und mit der Schlauchwandaußenseite verbunden werden.

In einem Gehäuse kann das Versteifungselement angeordnet werden und das Gehäuse mit einem Dichtungselement, der Sperrschicht, der äußeren Tragschicht, der thermisch isolierenden Schicht und der inneren Tragschicht verbunden werden.

Speziell kann das Gehäuse, das Dichtungselement, die Sperrschicht, die äußere Tragschicht, die thermisch isolierende Schicht und die innere Tragschicht durch ein zweites Nahtmaterial an Nahtstellen miteinander vernäht werden.

Vorgeschlagen wird auch die Verwendung eines Schlauches wie hierin offenbart und beschrieben zum Leiten eines in einer Kühl- oder Heizeinheit gekühlten oder erwärmten Gases an einen Abschnitt eines Flugobjekts, speziell eines Flugzeugs.

Die Ausführungsformen der Erfindung sind anhand von Beispielen dargestellt und nicht auf eine Weise, in der Beschränkungen aus den Figuren in die Patentansprüche übertragen oder hineingelesen werden.

Gleiche Bezugszeichen in den Figuren geben gleiche Elemente an.
- Figur 1: zeigt eine Schlauchwand 2 eines Schlauches 1 im Längsschnitt in einer teilweisen Explosionsansicht.
- Figur 2: zeigt die Schlauchwand 2 von Fig. 1 im Längsschnitt.
- Figur 3: zeigt eine Schlauchwand 2 eines Schlauches 1 im Längsschnitt in einer teilweisen Explosionsansicht.
- Figur 4: zeigt die Schlauchwand 2 von Fig. 3 im Längsschnitt.
- Figur 5a: zeigt einen Schlauch 1 in einer Seitenansicht.
- Figur 5b: zeigt einen Schlauch 1 in einer Seitenansicht.
- Figur 6a: zeigt einen Verfahrensschritt innerhalb eines Herstellungsverfahrens eines Schlauches 1 wie in Fig. 7 gezeigt.
- Figur 6b: zeigt einen Verfahrensschritt innerhalb eines Herstellungsverfahrens eines Schlauches 1 wie in Fig. 7 gezeigt.
- Figur 6c: zeigt eine Draufsicht einer thermisch isolierenden Schicht 11, 12, 13 wie in Fig. 6b gezeigt.
- Figur 6d: zeigt einen Verfahrensschritt innerhalb eines Herstellungsverfahrens eines Schlauches 1 wie in Fig. 7 gezeigt.
- Figur 6e: zeigt einen Verfahrensschritt innerhalb eines Herstellungsverfahrens eines Schlauches 1 wie in Fig. 7 gezeigt.
- Figur 7: zeigt einen Schlauch 1 wie durch die Verfahrensschritte der Fig. 6a, 6b, 6d, 6e dargestellt.

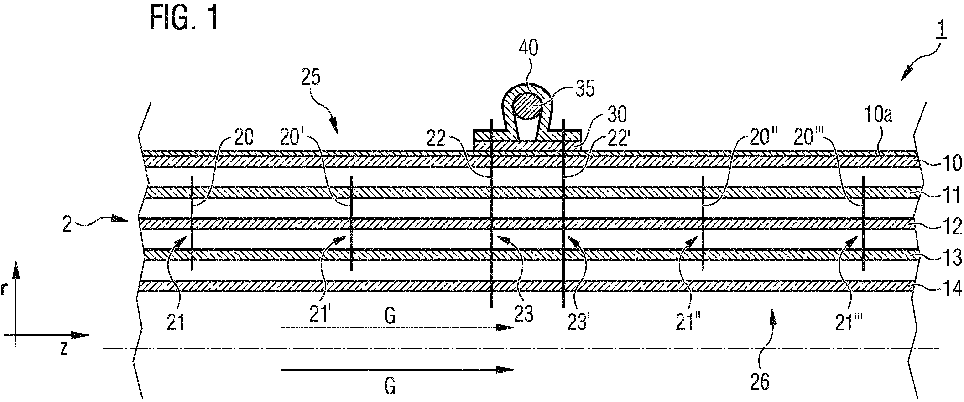

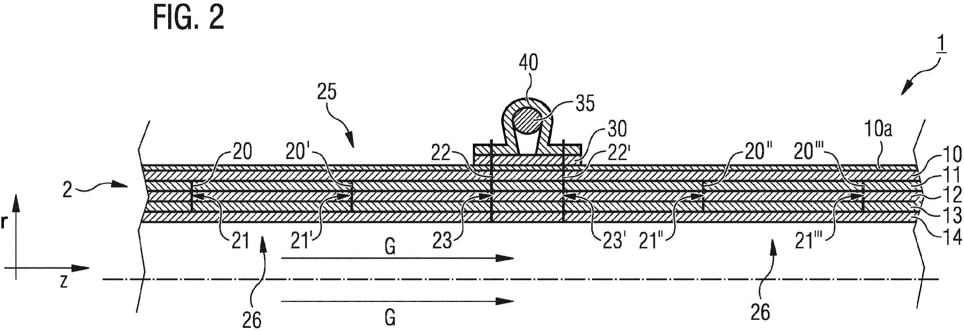

Die Figuren 1 und 2 zeigen einen Abschnitt einer Schlauchwand 2 eines Schlauches 1 in einem radialen Schnitt in Längsrichtung. Die Schlauchwand 2 ist dabei in Figur 1 teilweise als Explosionsansicht dargestellt. In beiden Figuren ist lediglich die obere Seite der Schlauchwand 2 dargestellt, die untere Seite der Schlauchwand 2 ergibt sich radialsymmetrisch um die z-Achse, wobei das dargestellte Versteifungselement 35, das Gehäuse 40 und das Dichtungselement 30 im unteren nicht dargestellten Abschnitt der Schlauchwand axial in z-Richtung zu der Position des Versteifungselements 35, des Gehäuses 40 und des Dichtungselements 30 der oberen Seite der Schlauchwand 2 versetzt ist, wenn das Versteifungselement 35 spiralförmig auf der Schlauchwandaußenseite 25 angeordnet ist.

Die Schlauchwand 2 des Schlauches 1 umfasst eine äußere Tragschicht 10 und eine innere Tragschicht 14, wobei die Seite der äußeren Tragschicht 10, die der Umgebung des Schlauches 1 zugewandt, also dem Inneren des Schlauches 1 abgewandt, ist eine Sperrschicht 10a in Form einer Beschichtung aufweist. Zwischen der äußeren Tragschicht 10 und der inneren Tragschicht 14 ist eine thermisch isolierende Schicht 11, 12, 13 angeordnet.

Die thermisch isolierende Schicht 11, 12, 13 umfasst eine äußere Isolierungstragschicht 11, eine innere Isolierungstragschicht 13 und eine Isolierungsschicht 12. Die äußere Isolierungstragschicht 11, die Isolierungsschicht 12 und die innere Isolierungstragschicht 13 sind miteinander in radialer Richtung vernäht. Die Vernähung ist an Nahtstellen 21, 21', 21", 21'" unter Verwendung eines Nahtmaterials 20, 20', 20", 20"' ausgestaltet.

Ein Versteifungselement 35 ist in einem Gehäuse 40 angeordnet. Das Gehäuse 40 kann beispielsweise ein bandförmiger Streifen sein, der um ein drahtförmiges Versteifungselement 35 gelegt ist. Das Gehäuse 40 ist mit der äußeren Tragschicht 10, der thermisch isolierenden Schicht 11, 12, 13 und der inneren Tragschicht mit einem zwischenliegenden Dichtungselement 30 verbunden. Die Verbindung ist als eine Vernähung des Gehäuses 40 mit dem Dichtelement 30, der äußeren Tragschicht 10 mit Sperrschicht 10a, der thermisch isolierenden Schicht 11, 12, 13 und der inneren Tragschicht 14 bereitgestellt. Die Vernähung ist durch ein zweites Nahtmaterial 22, 22' an Nahtstellen 23, 23' ausgestaltet.

Durch die Ausführung der Schlauchwand 2 des Schlauches 1 ergibt sich eine Schlauchwandaußenseite 25, die mit der Umgebung der Schlauchwand 2 und des Schlauches 1 in Kontakt steht. Zusätzlich ergibt sich eine Schlauchwandinnenseite 26, die mit einem Gas G, das durch das Innere des Schlauches 1 geleitet werden kann, in Kontakt steht.

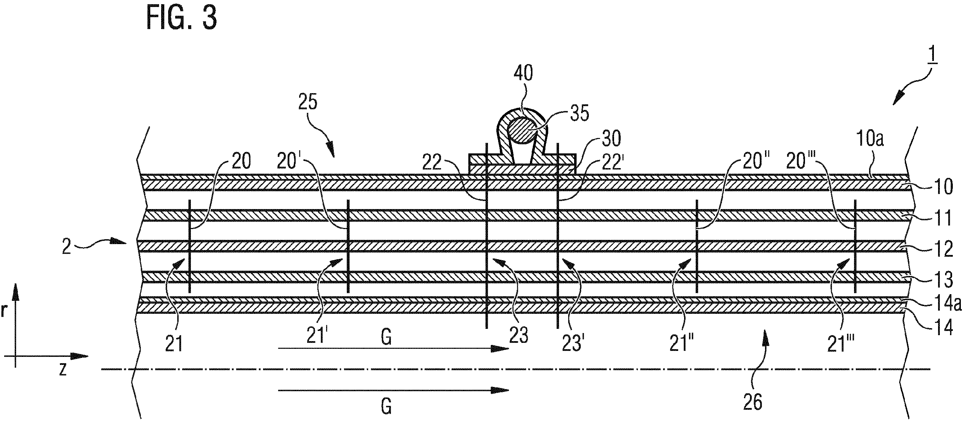

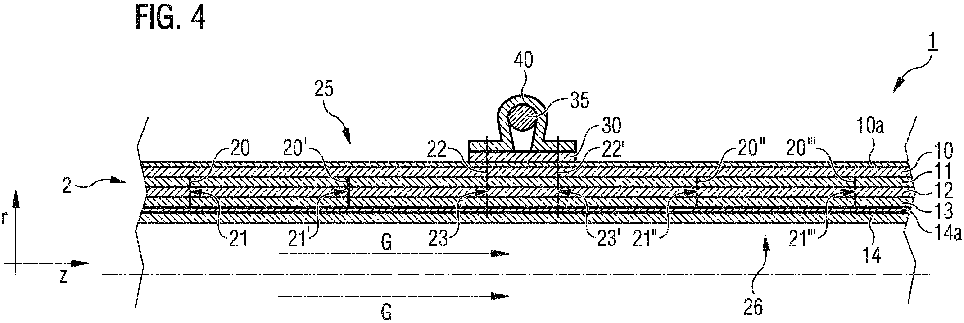

In den Figuren 3 und 4 ist eine zu der Ausführungsform der Figuren 1 und 2 ähnliche Ausführungsform einer Schlauchwand 2 eines Schlauches 1 dargestellt.

Die Schlauchwand 2 umfasst eine äußere Tragschicht 10 mit Sperrschicht 10a und eine innere Tragschicht 14. In der Ausführungsform der Figuren 3 und 4 ist auf der inneren Tragschicht 14 eine innere Sperrschicht 14a aufgebracht. Zwischen der äußeren Tragschicht 10 mit Sperrschicht 10a und der inneren Tragschicht 14 mit innerer Sperrschicht 14a ist eine thermisch isolierende Schicht 11, 12, 13 angeordnet.

Die thermisch isolierende Schicht 11, 12, 13 umfasst analog zu der Ausführungsform der Figuren 1 und 2 eine äußere Isolierungstragschicht 11, eine Isolierungsschicht 12 und eine innere Isolierungstragschicht 13.

Die äußere Isolierungstragschicht 11, die Isolierungsschicht 12 und die innere Isolierungstragschicht 13 sind an den Nahtstellen 21, 21', 21", 21"' mit einem Nahtmaterial 20, 20', 20", 20"' vernäht.

Ein Versteifungselement 35 ist in einem Gehäuse 40 liegend über ein Dichtungselement 30 mit den übrigen Schicht 10a, 10, 11, 12, 13, 14a, 14 an den Nahtstellen 23, 23' mit einem Nahtmaterial 22, 22' analog zu der in den Figuren 1 und 2 dargestellten Ausführungsform vernäht.

Die innere Sperrschicht 14a an der inneren Tragschicht 14 kann eine gassperrende Funktion, insbesondere eine wasserdampfsperrende Funktion, aufweisen. Dadurch wird insbesondere Verhindert, dass ein Gas G das durch das Innere des Schlauches 1 strömt in großem Ausmaß in die Schichten der thermisch isolierenden Schicht 11, 12, 13 und der äußeren Tragschicht 10 gelangt.

In beiden Ausführungsformen der Figuren 1 und 2 sowie 3 und 4 würde ein Gas G das durch das Innere des Schlauches 1 strömt spätestens (in positiver radialer Richtung) durch die Sperrschicht 10a auf der äußeren Tragschicht 10 von einem Ausströmen in radialer Richtung aus dem Schlauch 1 behindert werden.

Eine Wasserdampfsperre in Form der inneren Sperrschicht 14a an der inneren Tragschicht 14 reduziert das Eindringen von Wasser beispielsweise in die thermisch isolierende Schicht 11, 12, 13, wodurch eine Schimmel- oder Pilzbildung in der thermisch isolierenden Schicht 11, 12, 13 deutlich reduziert wird.

Sowohl in der Ausführungsform der Figuren 1 und 2 als auch in der Ausführungsform der Figuren 3 und 4 ist keine Sperrschicht auf der Seite der inneren Tragschicht 14, die dem Inneren des Schlauches 1 zugewandt ist, angeordnet. Dies hat den Vorteil, dass keine Bestandteile einer Sperrschicht in den Gasstrom, der zum Flugobjekt führt, gelangen wenn Teile oder Abschnitte einer Sperrschicht abplatzen oder sich ablösen.

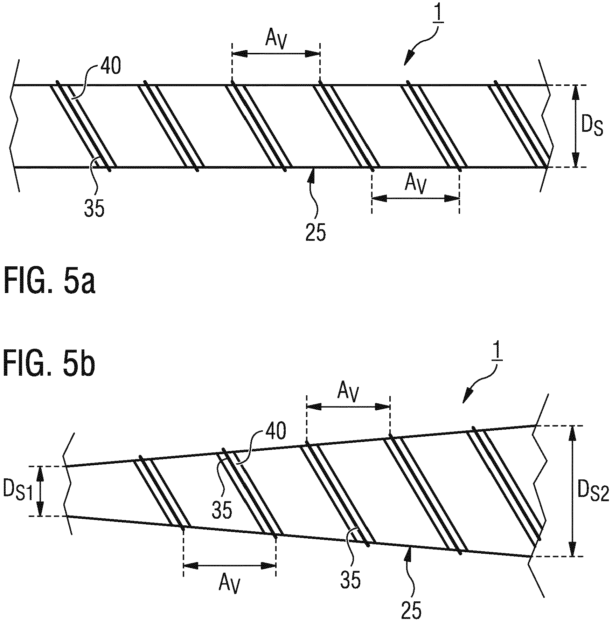

In Figur 5a ist ein Abschnitt eines Schlauches 1 in einer Seitenansicht dargestellt, wodurch die Anordnung eines Versteifungselements 35 in einem Gehäuse 40 auf der Schlauchwandaußenseite 25 besonders deutlich ersichtlich ist.

Das Versteifungselement 35 ist drahtförmig ausgestaltet und spiralförmig umlaufend auf der Schlauchwandaußenseite 25 angeordnet. An der Schlauchwandaußenseite 25 gehalten wird das Versteifungselement 35 durch ein Gehäuse 40, dass in Form eines Bandes ausgestaltet ist, über das Versteifungselement 35 gelegt ist und mit den übrigen Schichten der Schlauchwand 2 vernäht ist.

Der Abstand A_{V} zwischen zwei Wicklungen des Versteifungselements 35 in axialer Richtung ist kleiner als 200 mm, insbesondere kleiner als 150 mm. Der Abstand A_{V} ist zu messen, wenn der Schlauch vollständig axial expandiert ist, das heißt nicht axial zusammengedrückt oder gefaltet ist.

Der Durchmesser D_{S}, der von einem Gas G im Inneren des Schlauchs 1 durchströmt werden kann, ist in der Ausführungsform der Figur 5a konstant.

In Figur 5b ist ein ähnlicher Schlauch 1 wie der Schlauch 1 der Figur 5a dargestellt. Auch hier ist ein Versteifungselement 35 spiralförmig um die Schlauchwandaußenseite 25 des Schlauches 1 gewickelt, wobei das Versteifungselement 35 in einem Gehäuse 40 angeordnet ist.

Zwischen zwei Wicklungen des Verfestigungselements 35 liegt ein Abstand A_{V} der kleiner ist als 200 mm, insbesondere kleiner ist als 150 mm.

Die Ausführungsform der Figur 5b weist einen nicht konstanten Querschnitt auf, vielmehr vergrößert sich der Durchmesser von einem kleinen Durchmesser D_{S1} auf einen größeren Durchmesser D_{S2}. Dadurch lassen sich mit Hilfe des Schlauches 1 Elemente mit verschiedenen Durchmessern verbinden.

Beispielsweise kann der Strömungsausgangsdurchmesser einer Kühl- oder Heizeinheit kleiner sein als der benötigte Schlauchausgangsdurchmesser, wenn zum Beispiel ein erwärmtes Gas auf die Turbinen eines Flugzeugs geleitet werden soll, um diese zu enteisen.

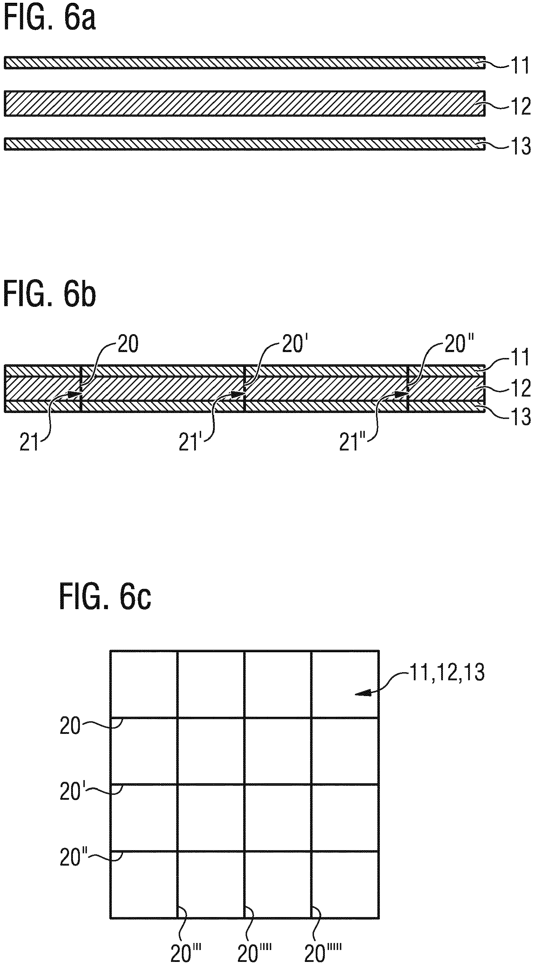

In den Figuren 6a bis 6e sind verschiedene Zwischenschritte auf dem Weg zur Herstellung eines Schlauches 1 der verschiedenen Ausführungsformen, die hierin offenbart und beschrieben wurden, dargestellt.

Die Figuren 6a und 6b zeigen die Herstellung der thermisch isolierenden Schicht 11, 12, 13.

Dazu können Bahnen aus beispielsweise einem Polyamid als äußere Isolierungstragschicht 11 und innere Isolierungstragschicht 13 bereitgestellt werden.

Zwischen die äußere Isolierungstragschicht 11 und innere Isolierungstragschicht 13 kann eine Schaumstoffschicht als Isolierungsschicht 12 platziert werden. Verbunden werden die drei Schichten 11, 12, 13 durch ein Vernähen mit einem Nahtmaterial 20, 20', 20" an Nahtstellen 21, 21', 21".

In Figur 6c ist eine Draufsicht einer so hergestellten thermisch isolierenden Schicht 11, 12, 13 dargestellt, wobei die Anordnung des Nahtmaterials 20, 20', ..., 20""' besonders gut ersichtlich ist. Die Vernähung der Schichten 11, 12, 13 kann über Kreuz erfolgen.

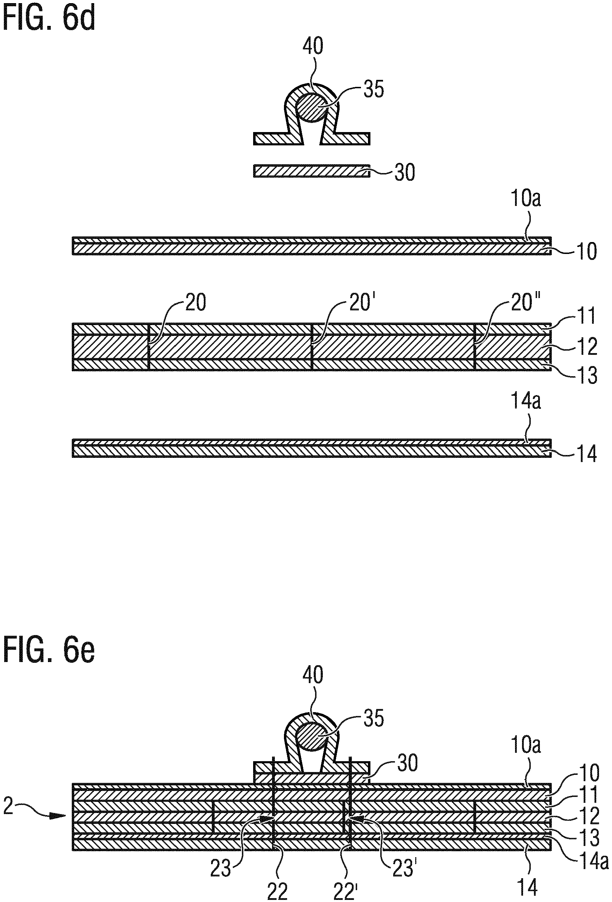

Die so hergestellte thermisch isolierende Schicht 11, 12, 13 kann, wie in Figur 6 dargestellt, zwischen eine äußere Tragschicht 10 mit Sperrschicht 10a und eine innere Tragschicht 14 mit Sperrschicht 14a positioniert werden.

Auch wenn hier das Herstellverfahren mit einer inneren Tragschicht 14 mit Beschichtung 14a beschrieben wird, ist das Herstellverfahren mit einer Tragschicht 14 ohne Sperrschicht 14a analog durchzuführen.

Zusätzlich zu den Schichten 10a, 10, 11, 12, 13, 14a, 14 wird ein Dichtungselement 30 (insbesondere bandförmig) und ein Gehäuse 40 (insbesondere bandförmig) mit einem darin liegenden Versteifungselement 35 bereitgestellt.

Um zu einem Schlauch 1 mit Schlauchwand 2 zu gelangen, werden die Schichten 10a, 10, 11, 12, 13, 14a, 14 schlauchförmig ausgebildet und das Gehäuse 40 mit innenliegendem Versteifungselement 35 über ein Dichtelement oder eine Dichtung 30 mit den Schichten 10a, 10, 11, 12, 13, 14a, 14 über ein Nahtmaterial 22, 22' an Nahtstellen 23, 23' vernäht.

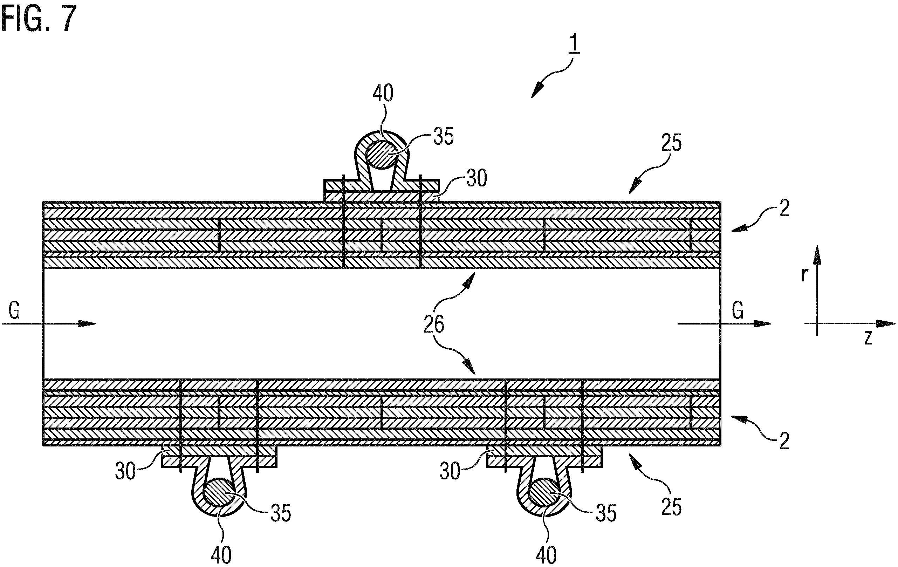

Ein so gefertigter Schlauch 1 ist in Figur 7 abgebildet. Die Schlauchwand 2 mit einer Schlauchwandaußenseite 25 und einer Schlauchwandinnenseite 26 ist (im Wesentlichen) radial symmetrisch ausgebildet. Die axiale Position (in z-Richtung) des Gehäuses 40 mit innenliegendem Versteifungselement 35 und Dichtung oder Dichtelement 30 variiert bei spiralförmiger Anordnung der Versteifungselements 35, des Gehäuses 40 und des Dichtelements 30 auf der Schlauchwandaußenseite 25.

### Beispiele:

1. Schlauch zum Leiten eines in einer Kühl- oder Heizeinheit gekühlten oder erwärmten Gases an einen Abschnitt eines Flugobjekts, wobei der Schlauch (1) eine Schlauchwand (2) mit einer Schlauchwandaußenseite (25) und einer Schlauchwandinnenseite (26) aufweist, wobei die Schlauchwand (2) umfasst:
   (a) eine äußere Tragschicht (10) und eine innere Tragschicht (14), wobei die innere Tragschicht (14) dem Inneren (i) des Schlauches (1) zugewandt ist und die äußere Tragschicht (10) in Richtung der Umgebung des Schlauches (1) orientiert ist;
   (b) eine thermisch isolierende Schicht (11, 12, 13), die zwischen der äußeren Tragschicht (10) und der inneren Tragschicht (14) angeordnet ist und eine thermische Isolierung zwischen dem Inneren (i) des Schlauches (1) und der Umgebung (a) des Schlauches (1) verursacht;
   (c) eine äußere Sperrschicht (10a), die auf der äußeren Tragschicht (10) angeordnet ist und durch die ein Stoffaustausch zwischen dem Inneren (i) des Schlauches (1) und der Umgebung (a) des Schlauches (1) zumindest reduziert wird;
   (d) und ein umlaufendes Versteifungselement (35), das die Schlauchwand (2) versteift und ihr eine schlauchförmige Grundform verleiht oder stabilisiert.
2. Schlauch nach Beispiel 1, wobei die innere Tragschicht (14) auf der dem Inneren des Schlauches (1) zugewandten Oberfläche keine gehärtete Sperrschicht umfasst, die einen Stoffaustausch zwischen dem Inneren (i) des Schlauches (1) und der Umgebung (a) des Schlauches (1) reduzieren würde.
3. Schlauch nach einem der vorstehenden Beispiele, wobei die innere Tragschicht (14) auf der dem Inneren des Schlauches (1) abgewandten Seite eine innen-nahe Sperrschicht (14a) umfasst, die einen Stoffaustausch zwischen dem Inneren des Schlauches (1) und der Umgebung des Schlauches (1) reduziert, insbesondere die innen-nahe Sperrschicht (14a) eine Wasserdampfsperrschicht ist, um einen Austausch von Wasserdampf zwischen dem Inneren (i) des Schlauches (1) und der Umgebung (a) des Schlauches (1) zu reduzieren.
4. Schlauch nach Beispiel 3, wobei die innen-nahe Sperrschicht (14a) eine fungizide Eigenschaft aufweist.
5. Schlauch nach einem der vorstehenden Beispiele, wobei die innere Tragschicht (14) dicker ist als die äußere Tragschicht (10).
6. Schlauch nach einem der vorstehenden Beispiele, wobei die Grundform zylindrisch ist, insbesondere zu einem der Enden verjüngend zulaufend.
7. Schlauch nach einem der vorstehenden Beispiele, wobei die thermisch isolierende Schicht (11, 12, 13) eine äußere Isolierungstragschicht (11), eine innere Isolierungstragschicht (13) und eine Isolierungsschicht (12) umfasst, insbesondere die äußere Isolierungstragschicht (11), die innere Isolierungstragschicht (13) und die Isolierungsschicht (12) durch ein erstes Nahtmaterial (20, 20', 20", ...) an Nahtstellen (21, 21', 21", ...) miteinander vernäht sind.
8. Schlauch nach einem der vorstehenden Beispiele, wobei das Versteifungselement (35) zumindest abschnittsweise spiralförmig umlaufend an der Schlauchwandaußenseite (25) angeordnet ist.
9. Schlauch nach einem der vorstehenden Beispiele, wobei das Versteifungselement (35) in einem Gehäuse (40) als Ummantelung liegend mit der Schlauchwandaußenseite (25) verbunden ist.
10. Schlauch nach Beispiel 9, wobei die Abriebfestigkeit des Mantels (40) höher ist als die Abriebfestigkeit der äußeren Sperrschicht (10a) und/oder höher ist als die Abriebfestigkeit des Versteifungselements (35), insbesondere gleitfähig ist.
11. Schlauch nach einem der vorstehenden Beispiele, wobei zwischen dem Versteifungselement (35) und der Schlauchwandaußenseite (25) ein Dichtungselement (30) angeordnet ist.
12. Schlauch nach einem der vorstehenden Beispiele, wobei das mantelförmige Gehäuse (40), in dem das Versteifungselement (35) angeordnet ist, ein Dichtungselement (30), die Sperrschicht (10), die äußere Tragschicht (10), die thermisch isolierende Schicht (11, 12, 13) und die innere Tragschicht (14) miteinander verbunden sind, insbesondere ein Gehäuse (40), ein Dichtungselement (30), die Sperrschicht (10), die äußere Tragschicht (10), die thermisch isolierende Schicht (11, 12, 13) und die innere Tragschicht (14) durch ein zweites Nahtmaterial (22, 22', ...) an Nahtstellen (23, 23', ...) miteinander vernäht sind.
13. Schlauch nach einem der vorstehenden Beispiele, wobei die Schlauchwand (2) kein Polyvinylchlorid (PVC) enthält.
14. Schlauch nach einem der vorstehenden Beispiele, wobei ein durchströmfähiger Querschnitt des Schlauches (1) als Inneres (i) einen Durchmesser von mindestens 50 mm, bevorzugt von mindestens 100 mm aufweist.
15. Verfahren zur Herstellung eines Schlauches (1) zum Leiten eines in einer Kühl- oder Heizeinheit gekühlten oder erwärmten Gases an ein Flugobjekt, das Verfahren mit den folgenden Schritten:
   (a) Bereitstellen einer thermisch isolierenden Schicht (11, 12, 13);
   (b) Bereitstellen einer äußeren Tragschicht (10) mit einer Sperrschicht (10a) und einer inneren Tragschicht (14);
   (c) Bereitstellen eines Versteifungselements (35);
   (d) Verbinden der isolierenden Schicht (11, 12, 13), der äußeren Tragschicht (10) mit der Sperrschicht (10a), der inneren Tragschicht (14) und dem Verfestigungselement (35) miteinander, sodass die isolierende Schicht (11, 12, 13) zwischen der äußeren Tragschicht (10) und der inneren Tragschicht (14) angeordnet ist;
   (e) Bilden eines Schlauches mit einer Schlauchwand (2), die eine Schlauchwandaußenseite (25) und eine Schlauchwandinnenseite (26) aufweist, aus der isolierenden Schicht (11, 12, 13), der äußeren Tragschicht (10) mit der Sperrschicht (10a) und der inneren Tragschicht (14);
   (f) Aufbringen des Versteifungselements (35) auf die Schlauchwandaußenseite (25).
16. Verfahren nach Beispiel 15, wobei die innere Tragschicht (14) auf der dem Inneren des Schlauches (1) zugewandten Seite keine Sperrschicht umfasst, die einen Stoffaustausch zwischen dem Inneren des Schlauches (1) und der Umgebung des Schlauches (1) reduziert.
17. Verfahren nach einem der vorstehenden Beispiele, wobei die innere Tragschicht (14) auf der dem Inneren des Schlauches (1) abgewandten Seite eine innere Sperrschicht (14a) umfasst, die einen Stoffaustausch zwischen dem Inneren des Schlauches (1) und der Umgebung des Schlauches (1) reduziert, insbesondere die innere Sperrschicht (14a) eine Wasserdampfsperrschicht ist, die den Austausch von Wasserdampf zwischen dem Inneren des Schlauches (1) und der Umgebung des Schlauches (1) reduziert.
18. Verfahren nach einem der vorstehenden Beispiele, wobei die thermisch isolierende Schicht (11, 12, 13) aus einer äußeren Isolierungstragschicht (11), einer inneren Isolierungstragschicht (13) und einer Isolierungsschicht (12) hergestellt wird, insbesondere die äußere Isolierungstragschicht (11), die innere Isolierungstragschicht (13) und die Isolierungsschicht (12) durch ein erstes Nahtmaterial (20, 20', 20", ...) an Nahtstellen (21, 21', 21", ...) miteinander vernäht wird.
19. Verfahren nach einem der vorstehenden Beispiele, wobei das Versteifungselement (35) zumindest abschnittsweise spiralförmig umlaufend an der Schlauchwandaußenseite (25) angeordnet wird.
20. Verfahren nach einem der vorstehenden Beispiele, wobei das Versteifungselement (35) in einem Gehäuse (40) liegend mit der Schlauchwandaußenseite (25) verbunden wird.
21. Verfahren nach einem der vorstehenden Beispiele, wobei zwischen dem Versteifungselement (35) und der Schlauchwandaußenseite (25) ein Dichtungselement (30) angeordnet wird.
22. Verfahren nach einem der vorstehenden Beispiele, wobei ein Gehäuse (40), in dem das Versteifungselement (35) angeordnet wird, ein Dichtungselement (30), die Sperrschicht (10), die äußere Tragschicht (10), die thermisch isolierende Schicht (11, 12, 13) und die innere Tragschicht (14) miteinander verbunden werden, insbesondere ein Gehäuse (40), ein Dichtungselement (30), die Sperrschicht (10), die äußere Tragschicht (10), die thermisch isolierende Schicht (11, 12, 13) und die innere Tragschicht (14) durch ein zweites Nahtmaterial (22, 22', ...) an Nahtstellen (23, 23', ...) miteinander vernäht werden.
23. Verwendung eines Schlauches (1) nach einem der Beispiele 1 bis 14 zum Leiten eines in einer Kühl- oder Heizeinheit gekühlten oder erwärmten Gases an einen Abschnitt eines Flugobjekts.
24. Flexible Stoffbahn für einen Schlauch zum Durchleiten von temperierter Luft, aber noch in einer ebenen Form und beinhaltend ...
   (a) eine äußere Tragschicht (10) und eine innere Tragschicht (14), wobei die innere Tragschicht (14) dem künftigen Inneren (i) des Schlauches (1) zugewandt ist und die äußere Tragschicht (10) der künftigen Umgebung des Schlauches (1) zugewandt ist;
   (b) eine thermisch isolierende Schicht (11, 12, 13), die zwischen der äußeren Tragschicht (10) und der inneren Tragschicht (14) angeordnet ist und eine thermische Isolierung zwischen dem künftigen Inneren (i) des Schlauches (1) und der künftigen Umgebung (a) des Schlauches (1) verursacht;
   (c) eine äußere Sperrschicht (10a), die auf der äußeren Tragschicht (10) angeordnet ist und durch die ein Stoffaustausch zwischen dem Inneren (i) des künftigen Schlauches (1) und der künftigen Umgebung (a) des Schlauches (1) zumindest reduziert wird.
25. Stoffbahn nach Beispiel 24, wobei die innere Tragschicht (14) auf der nach Aussen (a) weisenden Oberfläche keine gehärtete Sperrschicht umfasst, die einen Stoffaustausch zwischen dem Inneren (i) des Schlauches (1) und der Umgebung (a) des Schlauches (1) reduzieren würde, wobei Aussen mit Blick auf die Stoffbahn zu sehen ist, die auch ein Inneres aufweist. welches zwischen äußerer Tragschicht (10) und innerer Tragschicht (14) liegt.
26. Stoffbahn nach einem der vorstehenden beiden Beispiele, wobei die innere Tragschicht (14) auf der vom dem künftigen Inneren des Schlauches (1) abgewandten (also im Innern der Stoffbahn liegenden) Oberfläche eine innen-nahe Sperrschicht (14a) umfasst, die einen Stoffaustausch zwischen dem künftigen Inneren des Schlauches (1) und der künftigen Umgebung des Schlauches (1) reduziert.
27. Stoffbahn nach dem vorstehenden Beispiel, wobei die innen-nahe Sperrschicht (14a) eine Wasserdampf-Sperrschicht ist, um einen Austausch von Wasserdampf zwischen künftigem Inneren (i) und Umgebung (a) des Schlauches (1) zu reduzieren.

## Patentansprüche

1. **Schlauch** zum Leiten eines in einer Kühl- oder Heizeinheit gekühlten oder erwärmten Gases an einen Abschnitt eines Flugobjekts, wobei der Schlauch (1) eine Schlauchwand (2) mit einer Schlauchwandaußenseite (25) und einer Schlauchwandinnenseite (26) aufweist, wobei die Schlauchwand (2) umfasst:
(a) eine äußere Tragschicht (10) und eine innere Tragschicht (14), wobei die innere Tragschicht (14) dem Inneren (i) des Schlauches (1) zugewandt ist und die äußere Tragschicht (10) in Richtung der Umgebung des Schlauches (1) orientiert ist;
(b) eine thermisch isolierende Schicht (11, 12, 13), die zwischen der äußeren Tragschicht (10) und der inneren Tragschicht (14) angeordnet ist und eine thermische Isolierung zwischen dem Inneren (i) des Schlauches (1) und der Umgebung (a) des Schlauches (1) verursacht;
(c) eine äußere Sperrschicht (10a), die auf der äußeren Tragschicht (10) angeordnet ist und durch die ein Stoffaustausch zwischen dem Inneren (i) des Schlauches (1) und der Umgebung (a) des Schlauches (1) zumindest reduziert wird;
(d) ein umlaufendes Versteifungselement (35), das die Schlauchwand (2) versteift und ihr eine schlauchförmige Grundform verleiht oder stabilisiert;
(e) und zwischen dem Versteifungselement (35) und der Schlauchwandaußenseite (25) ein Dichtungselement (30) angeordnet ist.

2. Schlauch nach Anspruch 1, wobei die innere Tragschicht (14) auf der dem Inneren des Schlauches (1) zugewandten Oberfläche keine gehärtete Sperrschicht umfasst, die einen Stoffaustausch zwischen dem Inneren (i) des Schlauches (1) und der Umgebung (a) des Schlauches (1) reduzieren würde.

3. Schlauch nach einem der vorstehenden Ansprüche, wobei die innere Tragschicht (14) auf der dem Inneren des Schlauches (1) abgewandten Seite eine innen-nahe Sperrschicht (14a) umfasst, die einen Stoffaustausch zwischen dem Inneren des Schlauches (1) und der Umgebung des Schlauches (1) reduziert, insbesondere die innen-nahe Sperrschicht (14a) eine Wasserdampfsperrschicht ist, um einen Austausch von Wasserdampf zwischen dem Inneren (i) des Schlauches (1) und der Umgebung (a) des Schlauches (1) zu reduzieren.

4. Schlauch nach einem der vorstehenden Ansprüche, wobei die innere Tragschicht (14) dicker ist als die äußere Tragschicht (10).

5. Schlauch nach einem der vorstehenden Ansprüche, wobei die thermisch isolierende Schicht (11, 12, 13) eine äußere Isolierungstragschicht (11), eine innere Isolierungstragschicht (13) und eine Isolierungsschicht (12) umfasst, insbesondere die äußere Isolierungstragschicht (11), die innere Isolierungstragschicht (13) und die Isolierungsschicht (12) durch ein erstes Nahtmaterial (20, 20', 20", ...) an Nahtstellen (21, 21', 21", ...) miteinander vernäht sind.

6. Schlauch nach einem der vorstehenden Ansprüche, wobei das mantelförmige Gehäuse (40), in dem das Versteifungselement (35) angeordnet ist, ein Dichtungselement (30), die Sperrschicht (10), die äußere Tragschicht (10), die thermisch isolierende Schicht (11, 12, 13) und die innere Tragschicht (14) miteinander verbunden sind, insbesondere ein Gehäuse (40), ein Dichtungselement (30), die Sperrschicht (10), die äußere Tragschicht (10), die thermisch isolierende Schicht (11, 12, 13) und die innere Tragschicht (14) durch ein zweites Nahtmaterial (22, 22', ...) an Nahtstellen (23, 23', ...) miteinander vernäht sind.

7. Schlauch nach einem der vorstehenden Ansprüche, wobei die Schlauchwand (2) kein Polyvinylchlorid (PVC) enthält.

8. **Verfahren** zur Herstellung eines Schlauches (1) zum Leiten eines in einer Kühl- oder Heizeinheit gekühlten oder erwärmten Gases an ein Flugobjekt, das Verfahren mit den folgenden Schritten:
(a) Bereitstellen einer thermisch isolierenden Schicht (11, 12, 13);
(b) Bereitstellen einer äußeren Tragschicht (10) mit einer Sperrschicht (10a) und einer inneren Tragschicht (14);
(c) Bereitstellen eines Versteifungselements (35);
(d) Verbinden der isolierenden Schicht (11, 12, 13), der äußeren Tragschicht (10) mit der Sperrschicht (10a), der inneren Tragschicht (14) und dem Verfestigungselement (35) miteinander, sodass die isolierende Schicht (11, 12, 13) zwischen der äußeren Tragschicht (10) und der inneren Tragschicht (14) angeordnet ist;
(e) Bilden eines Schlauches mit einer Schlauchwand (2), die eine Schlauchwandaußenseite (25) und eine Schlauchwandinnenseite (26) aufweist, aus der isolierenden Schicht (11, 12, 13), der äußeren Tragschicht (10) mit der Sperrschicht (10a) und der inneren Tragschicht (14);
(f) Aufbringen des Versteifungselements (35) auf die Schlauchwandaußenseite (25);
(g) Anordnen eines Dichtungselements (30) zwischen dem Versteifungselement (35) und der Schlauchwandaußenseite (25).

9. Verfahren nach Anspruch 8, wobei die innere Tragschicht (14) auf der dem Inneren des Schlauches (1) zugewandten Seite keine Sperrschicht umfasst, die einen Stoffaustausch zwischen dem Inneren des Schlauches (1) und der Umgebung des Schlauches (1) reduziert.

10. Verfahren nach einem der vorstehenden Ansprüche, wobei die innere Tragschicht (14) auf der dem Inneren des Schlauches (1) abgewandten Seite eine innere Sperrschicht (14a) umfasst, die einen Stoffaustausch zwischen dem Inneren des Schlauches (1) und der Umgebung des Schlauches (1) reduziert, insbesondere die innere Sperrschicht (14a) eine Wasserdampfsperrschicht ist, die den Austausch von Wasserdampf zwischen dem Inneren des Schlauches (1) und der Umgebung des Schlauches (1) reduziert.

11. Verfahren nach einem der vorstehenden Ansprüche, wobei die thermisch isolierende Schicht (11, 12, 13) aus einer äußeren Isolierungstragschicht (11), einer inneren Isolierungstragschicht (13) und einer Isolierungsschicht (12) hergestellt wird, insbesondere die äußere Isolierungstragschicht (11), die innere Isolierungstragschicht (13) und die Isolierungsschicht (12) durch ein erstes Nahtmaterial (20, 20', 20", ...) an Nahtstellen (21, 21', 21", ...) miteinander vernäht wird.

12. Verfahren nach einem der vorstehenden Ansprüche, wobei ein Gehäuse (40), in dem das Versteifungselement (35) angeordnet wird, ein Dichtungselement (30), die Sperrschicht (10), die äußere Tragschicht (10), die thermisch isolierende Schicht (11, 12, 13) und die innere Tragschicht (14) miteinander verbunden werden, insbesondere ein Gehäuse (40), ein Dichtungselement (30), die Sperrschicht (10), die äußere Tragschicht (10), die thermisch isolierende Schicht (11, 12, 13) und die innere Tragschicht (14) durch ein zweites Nahtmaterial (22, 22', ...) an Nahtstellen (23, 23', ...) miteinander vernäht werden.

13. **Flexible Stoffbahn für einen Schlauch** zum Durchleiten von temperierter Luft, aber noch in einer ebenen Form und beinhaltend ...
(a) eine äußere Tragschicht (10) und eine innere Tragschicht (14), wobei die innere Tragschicht (14) dem künftigen Inneren (i) des Schlauches (1) zugewandt ist und die äußere Tragschicht (10) der künftigen Umgebung des Schlauches (1) zugewandt ist;
(b) eine thermisch isolierende Schicht (11, 12, 13), die zwischen der äußeren Tragschicht (10) und der inneren Tragschicht (14) angeordnet ist und eine thermische Isolierung zwischen dem künftigen Inneren (i) des Schlauches (1) und der künftigen Umgebung (a) des Schlauches (1) verursacht;
(c) eine äußere Sperrschicht (10a), die auf der äußeren Tragschicht (10) angeordnet ist und durch die ein Stoffaustausch zwischen dem Inneren (i) des künftigen Schlauches (1) und der künftigen Umgebung (a) des Schlauches (1) zumindest reduziert wird.

14. Stoffbahn nach Anspruch 13, wobei die innere Tragschicht (14) auf der vom dem künftigen Inneren des Schlauches (1) abgewandten (also im Innern der Stoffbahn liegenden) Oberfläche eine innen-nahe Sperrschicht (14a) umfasst, die einen Stoffaustausch zwischen dem künftigen Inneren des Schlauches (1) und der künftigen Umgebung des Schlauches (1) reduziert.

15. Stoffbahn nach Anspruch 14, wobei die innen-nahe Sperrschicht (14a) eine Wasserdampf-Sperrschicht ist, um einen Austausch von Wasserdampf zwischen künftigem Inneren (i) und Umgebung (a) des Schlauches (1) zu reduzieren.
